# EUROPEAN PATENT APPLICATION

(11) **EP 2 802 061 A1**
(43) Date of publication of application: **12.11.2014**
(21) Application number: 12869022.9
(22) Date of filing: 22.02.2012
(51) Int. Cl.: H02K 1/16, H02K 1/18, H02K 1/27, H02K 15/08

(54) **AMORPHOUS IRON ALLOY AXIAL FLUX DISC-TYPE MOTOR, MANUFACTURE METHOD THEREFOR AND STATOR ASSEMBLY**

(71) Applicant: Shenzhen Hopewin Technology Co., Ltd., Shenzhen, Guangdong 518104 (CN)
(72) Inventor: SHI, Lei, Shenzhen Guangdong 518104 (CN); LIU, Qingshan, Shenzhen Guangdong 518104 (CN); XIE, Wei, Shenzhen Guangdong 518104 (CN)
(74) Representative: ProI European Patent Attorneys
(86) International application number: PCT/CN2012/071449
(87) International publication number: WO 2013/123647

(57) **Abstract**

A disc-type electric machine with amorphous iron alloy axial magnetic circuit comprises a stator assembly (20) provided with a stator iron core (21), wherein the stator iron core (21) with an axial center through hole (211) is processed into a cylinder by laminating amorphous iron alloy sheets, and the outer cylindrical surface of the stator iron core (21) is uniformly processed with a plurality of equi-spaced axial armature slots (212) towards the center axial line. The stator assembly (20) further comprises winding assemblies (22) with the same number as the armature slots (212), each winding assembly (22) comprises a winding wire frame (222) matched with the armature slot (212), each stator winding (221) arranged respectively in a slot(2221) of the winding wire frame (222) and a magnetic conducting body (223) arranged in a through hole of the winding wire frame (222), and each winding assembly (22) is respectively arranged in an armature slot (212) of the stator iron core (21). The disc-type electric machine has short axial size, less moving components, small eddy current loss, excellent high-frequency characteristic, low temperature rising, high efficiency, high power density, high material utilization rate and high efficient energy-saving.

## Description

### Technical Field

The invention relates to magnetic circuit parts for manufacturing of electric machine, especially magnetic circuit parts for manufacturing of disc-type electric machine, particularly stator or rotor body characterized by armature winding and magnetic materials.

### Background Art

Invented by Faraday in 1821, disc-type electric machine fails to be further developed for over 100 years as restricted by material and technological level. In 1940s and 1950s, the disc-type electric machine was valued again, applied to hard disk of computers, miniature tape recorders and other products. Compared with traditional radial magnetic circuit electric machine, disc-type electric machine has short axial size, less moving components, high efficiency and other advantages; particularly it is appropriate for occasions with strict restriction on axial installation size of electric machine.

Traditional permanent magnet electric machine is provided with radial magnetic pole structure, its windings are embedded in iron core laminations according to regular rules, but axial size of the electric machine is long, unfit to be installed in thin space. Therefore, disc-type electric machine aiming at compressing axial size of traditional electric machine and changing it radial magnetic circuit to axial one is more and more valued by people. Stator iron core of disc-type electric machine based on prior art is made from silicon steel lamination with great iron loss, serious heating, thus giving rise to low efficiency.

With progressive development of disc-type electric machine technology, it was found that utilization rate of disc-type electric machine is unsatisfactory. We know that heat dissipation effect of traditional electric machine is not ideal, for rotor is wrapped up in stator; despite disc-type electric machine has avoided such phenomenon structurally, but under same volume the disc-type electric machine generally has more stator teeth than that of traditional electric machine, which means greater iron loss and lower efficiency.

Among the electric machine losses, the iron loss takes up a considerable proportion, which dissipates non-renewable energy resource in the form of giving out heat, at the same time causing increase of temperature rise and reduction of efficiency of the electric machine. Reducing iron loss of electric machine is a major task during the design of electric machine; Adopting new material with high magnetic permeability, large resistance and low eddy current loss to replace silicon steel sheet is the orientation of R & D of electric machine. Inherent weaknesses of silicon steel sheet at magnetic permeability, resistance, eddy current loss, high frequency feature and the like make us unable to manufacture disc type electric machine with higher efficiency.

### Content of the Invention

The technical problem the invention aims to settle, lies in that to avoid the above-mentioned deficiencies of prior art and to provide a disc-type electric machine with Amorphous Iron Alloy Axial Magnetic Circuit as well as its manufacturing method and stator assembly. This kind of electric machine has short axial size, less moving components, small eddy current loss, excellent high-frequency characteristic, low temperature rise, high efficiency, high power density and high material utilization rate. It is a high efficient energy-saving electric machine.

The technical solution adopted in the invention to resolve the said problem is as follows:

A disc-type electric machine with Amorphous Iron Alloy Axial Magnetic Circuit is presented, comprising: a shell, an end cover, a stator assembly, a rotor assembly and an electric machine shaft matched with the said stator assembly; one end face of the said stator assembly is fixed on the inner face of the said end cover axially; the said rotor assembly is fixed on the said electric machine shaft, and close to the other end face of the said stator assembly in parallel, thus to forming an axial air gap between them; the said electric machine shaft is rotatably supported on the position determined by the said end cover and/or shell, the said end cover is fixed at the open end of the said shell; the said stator assembly comprises a stator iron core; the said stator iron core is processed into a cylinder with an axial central through-hole from the amorphous iron alloy lamination, and the outer cylindrical surface of the stator iron core is uniformly processed with a plurality of equi-spaced axial armature slots towards the center axial line radially; the said stator assembly further comprises winding assemblies with the same number as the axial armature slots of the said stator iron core, each winding assembly comprises a winding wire frame matched with the axial armature slots of the said stator iron core, a stator winding arranged in the slot of the winding wire frame and a piece of magnetic conducting body arranged in the through-hole of the winding wire frame; and each winding assembly is respectively arranged in each axial armature slot of the said stator iron core.

The said stator winding is fixed in the slot of the said winding wire frame with quick-drying adhesive.

The said winding assemblies are fixed in the axial armature slots of the said stator iron core with adhesive.

The said rotor assembly comprises a disc-shaped rotor sheet made from non-magnetic stainless steel, as well as permanent magnets of even number; the said rotor sheet is uniformly arranged with equi-spaced through-holes with the same number as the said permanent magnets, the permanent magnet are uniformly fixed respectively in a through-hole of the said rotor sheet in equal space, with N and S poles alternately arranged.

The said rotor assembly further comprises a disc-shaped magnetism-tied plate made from non-magnetic stainless steel, outer diameter of the magnetism-tied plate is smaller than that of the said rotor sheet, and the said magnetism-tied plate is arranged with a center through-hole; the said magnetism-tied plate is fixed on the end face of the said rotor sheet deviated from the said stator assembly, and covers each permanent magnet which are fixed respectively in each through-hole of the said rotor sheet.

The said rotor sheet is arranged with a center through-hole, around which there are several axial through-holes; the said electric machine shaft is arranged with a pedestal seat shaped like a flange, the pedestal seat is arranged with several axial threaded holes; the said electric machine shaft is inserted in the center through-hole of the said rotor sheet, each screw respectively passes through each axial through-hole on the said rotor sheet and is screwed in each axial threaded hole on the pedestal seat of the said electric machine shaft , thus fixing the said rotor sheet on the said electric machine shaft.

Inner face of the said end cover is arranged with an axial center boss matched with the axial central through-hole of the said stator iron core; the axial center boss of the said end cover is assembled in the axial central through-hole of the said stator iron core, and stator iron core of the said stator assembly is fixed on the said end cover with adhesive.

The said disc-type electric machine further comprises two bearings installed separately in two axial central through-hole of the said end cover, and by virtue of the two bearings, the said electric machine shaft is rotatably supported on the said end cover.

The invention further presents a stator assembly applied to disc-type electric machine, comprising a stator iron core, wherein the said stator iron core is processed into a cylinder with an axial central through-hole from the amorphous iron alloy lamination, and the outer cylindrical surface of the stator iron core is uniformly processed with a plurality of equi-spaced axial armature slots towards the center axial line radially; the said stator assembly further comprises winding assemblies with the same number as the axial armature slots of the said stator iron core, each winding assembly comprises a winding wire frame matched with the axial armature slots of the said stator iron core, a stator winding arranged in the slot of the winding wire frame and a piece of magnetic conducting body arranged in a through-hole of the winding wire frame; and each winding assembly is respectively arranged in each axial armature slot of the said stator iron core.

Accordingly, the invention further presents manufacturing method of a disc-type electric machine with Amorphous Iron Alloy Axial Magnetic Circuit, comprising the following steps:
a. Preparation: select and use commercially available amorphous iron alloy lamination of satisfactory sizes, which shall be processed into a cylinder by laminating and served as blank of stator iron core of the stator assembly;
b. As to the fabrication of stator iron core, execute one of the following steps selectively:
   b₁. if the blank of the said stator iron core is a cylindrical section, axial central through-hole is required to be processed on the blank of the said stator iron core, and the outer cylindrical surface of the stator iron core is required to be uniformly processed with a plurality of equi-spaced axial armature slots towards the center axial line radially;
   b₂. if the blank of the said stator iron core is a cylindrical section with axial central through-hole, it is only required to process the outer cylindrical surface of the blank of the stator iron core uniformly with a plurality of equi-spaced axial armature slots towards the center axial line radially;
c. Fixation between the stator iron core and the end cover: coat adhesive on one axial end face of the said stator iron core and inner cylindrical surface of its axial central through-hole, and slip the axial central through-hole of the said stator iron core onto the axial center boss of the said end cover, enable the axial end face of the said stator iron core coated with adhesive to cling to the inner face of the said end cover, then roast and finalize under 125±5°C for 3~4hours, completing the fixation between the said stator iron coreand the said end cover;
d. Fabrication of winding assemblies of the stator assembly:
   d₁. Wind enamel-insulated wire in the slots of the winding wire frame to form stator winding;
   d₃. Embed magnetic conducting body in the through-hole of the said winding wire frame;
e. Assemble the winding assemblies and the stator iron core to be stator assembly:
   e₁. Load each winding assembly respectively in each axial armature slot of the stator iron core which has been fixed with the said end cover, note that each winding assembly shall not be higher than the axial end face of the said stator iron core;
   e₂. Winding assemblies in each axial armature slot of the said stator iron core shall be entirely poured with adhesive, then roasted and finalized under 66±5°C for 1.5∼2.5hours, enabling each winding assembly to be firmly adhered to the stator iron core as a whole;
f. According to normal operation, fix the rotor assembly on the electric machine shaft; the rotor assembly comprises a rotor sheet and permanent magnets of even number which are fixed on the rotor sheet;
g. Complete machine assembly: according to normal operation, make the said electric machine shaft supported rotatably on the position determined by the said end cover and/ or shell, and fix the said end cover to the said shell to complete the whole assembly of the said electric machine.

After the step d₁ and before the step d₃ of d, there is also step d₂, namely bond and fix the said stator winding in the slots of the winding wire frame with adhesive.

Rotor sheet of the said rotor assembly is a disc made of non-magnetic stainless steel, and the rotor sheet is uniformly arranged with equi-spaced through-holes with the same number as the said permanent magnets; after each permanent magnet of the said rotor assembly is cleaned up by cleaning agent, coat adhesive on one surface of it, bond and fix it respectively in a through-hole of the said rotor sheet, with N and S poles alternately arranged, then roast and finalize under 125±5°C for 3~4hours, so as to complete the fabrication of the said rotor assembly.

The said rotor assembly further comprises a disc-type magnetism-tied plate made from non-magnetic conducting stainless steel, outer diameter of the magnetism-tied plate is smaller than that of the said rotor sheet, and the said magnetism-tied plate is arranged with a center through-hole ,after the said magnetism-tied plate is cleaned up by cleaning agent, coat adhesive on one end face of it, and bond and fix it on the end face of the said rotor sheet deviated from the said stator assembly, and cover all the permanent magnets fixed in each through-hole of the said rotor sheet, then roast and finalize under 125±5°C for 3~4hours.

Magnetic conducting body embedded into the through-hole of the said winding wire frame is made from a Q235 brand of carbon structural steel.

As to adhesive for bonding and fixing among each component in the said stator assembly, between the stator iron core and the end cover, and among each component in the said rotor assembly, its resistance to heat shall not be lower than heat resisting level of the insulation class of the said electric machine.

Compared with the prior art, beneficial effects of the disc-type electric machine with amorphous iron alloy axial magnetic circuit as well as its manufacturing method and stator assembly are as follows:

Axial magnetic circuit of disc-type electric machine constructed with amorphous iron alloy can reduce size, lower loss and increase efficiency of the disc-type electric machine effectively, meanwhile, each winding assembly can be fabricated independently, then placed in each axial armature slot of the stator iron core, which is convenient for assembly and saving labor hour; inner face of the end cover is arranged with an axial center boss inserted in the axial central through-hole of the stator iron core, while the two bearings supporting the electric machine shaft are installed in the axial central through-hole of the end cover, thickness of the stator iron core is fully utilized, enabling the axial size of the disc-type electric machine to be shorter; stator iron core of the said stator assembly is fixed on the said end cover with adhesive, and the electric machine shaft is designed to be pedestal seat shaft, thus the rotor assembly is directly fixed on the pedestal seat of the electric machine shaft, enabling components of the disc-type electric machine to be fewer, to avoid flux leakage and improve the ability of magnetic storage, a piece of magnetism-tied plate is particularly fixed on the end face of the said rotor sheet deviated from the said stator assembly. The invention is featured by short axial size, less moving components, small eddy current loss, excellent high-frequency characteristic, low temperature rising, high efficiency, high power density, high material utilization rate and high efficient energy-saving.

### Description of Figures

Figure 1 shows a longitudinal sectional diagram of orthographic projection for the integral structure of the preferable embodiment for the invention "A disc-type electric machine with amorphous iron alloy axial magnetic circuit".
Figure 2 shows an axonometric projection diagram of the said disc-type electric machine in a state of disassembly.
Figure 3 shows an axonometric projection diagram of the stator iron core 21 of the said disc-type electric machine while the winding assembly 22 is being placed into the stator iron core 21, where arrow A indicates loading direction.
Figure 4 shows flux route diagram of the said disc-type electric machine, where arrow B, C, D and E indicate flux route.
Figure 5 shows an axonometric projection diagram of the winding assembly 22 of the said disc-type electric machine while the stator winding 221 is being wound on the winding wire frame 222 to be winding assembly 22, where magnetic conducting body 223 is not shown.
Figure 6 shows an axonometric projection diagram of the winding wire frame 222 of the said disc-type electric machine.
Figure 7 shows an axonometric projection diagram of the magnetic conducting body 223 of the said disc-type electric machine.
Figure 8 shows an orthographic projection top view diagram of the stator assembly 20 of the disc-type electric machine shown in Figure 1.
Figure 9 shows a G-G sectional view of Figure 8.
Figure 10 shows a bottom view diagram of the orthographic projection of the rotor assembly 30 of the disc-type electric machine shown in Figure 1.
Figure 11 shows an axonometric projection diagram of the rotor assembly 30 of the said disc-type electric machine.
Figure 12 shows an axonometric projection diagram of the said rotor assembly 30 in the other direction.

### Mode of Carrying Out the Invention

Now, further detailed instructions will be made on the invention combining each attached drawing.

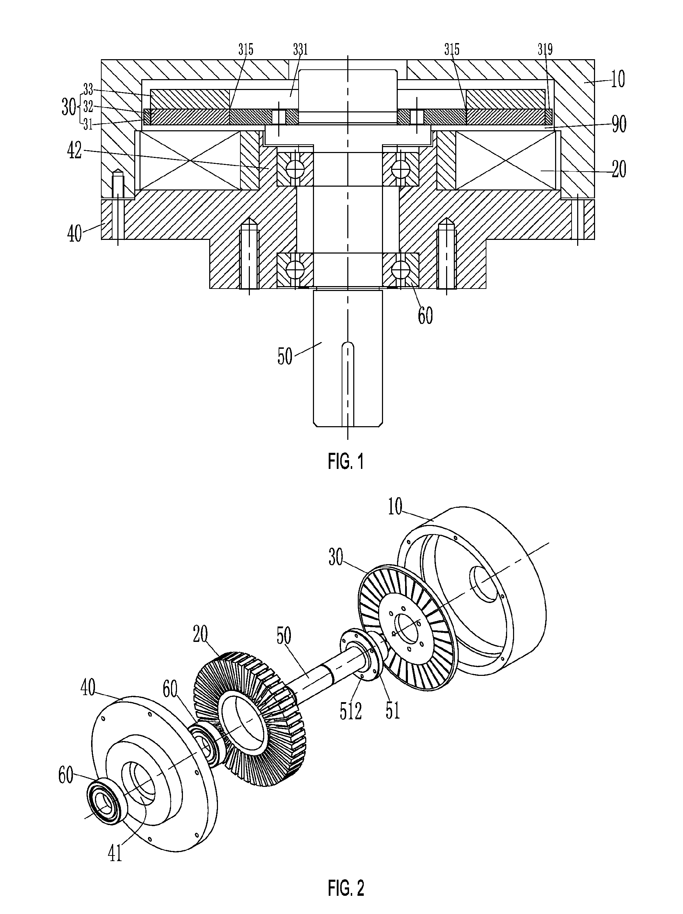

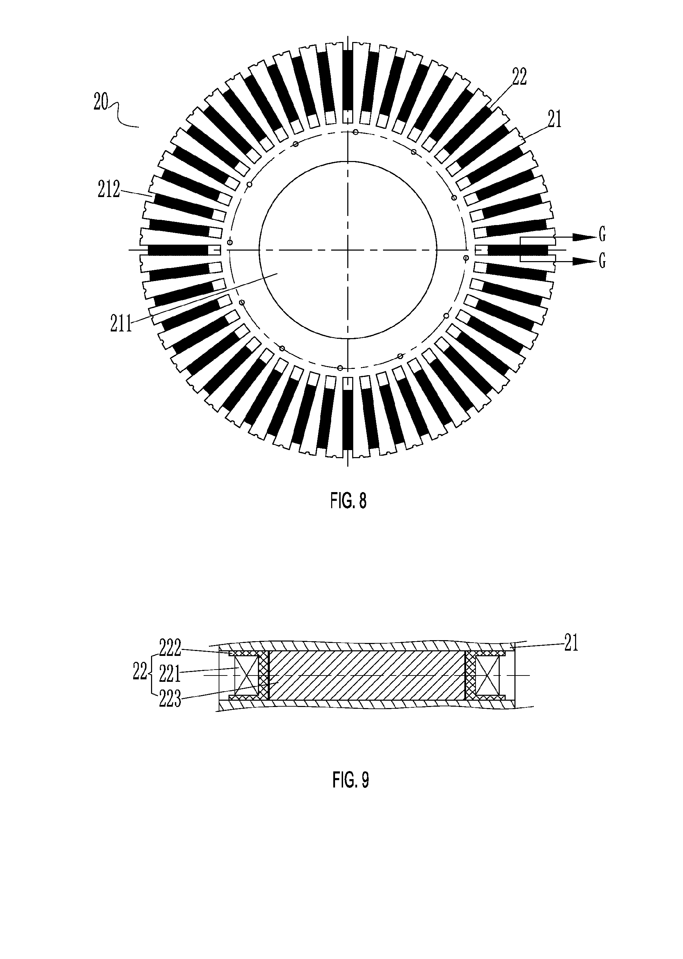

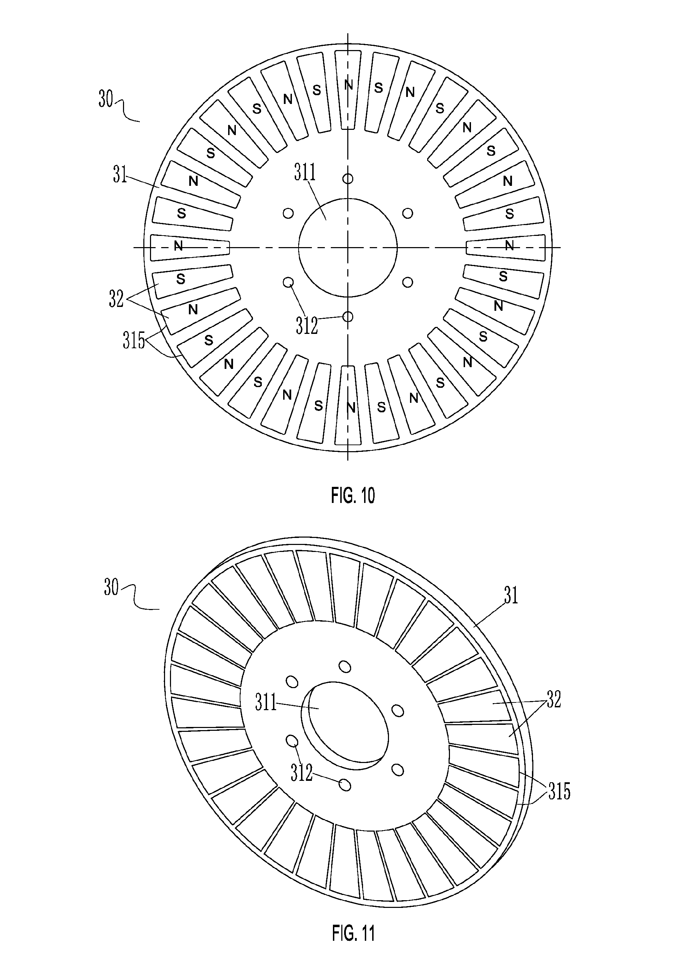

See Figure 1 to Figure 12, a disc-type electric machine with amorphous iron alloy axial magnetic circuit, comprises a shell 10, an end cover 40, a stator assembly 20, a rotor assembly 30 and an electric machine shaft 50 matched with the said stator assembly 20. one end face of the said stator assembly 20 is fixed on the inner face of the said end cover 40 axially; the said rotor assembly 30 is fixed on the said electric machine shaft 50, and close to the other end face of the said stator assembly 20 in parallel, thus to forming an axial air gap 90 between them; the said electric machine shaft 50 is rotatably supported on the position determined by the said end cover 40 and/ or shell 10, the said end cover 40 is fixed at the open end of the said shell 10. the said stator assembly 20 comprises a stator iron core 21, the said stator iron core 21 is processed into a cylinder with an axial central through-hole 211 from the amorphous iron alloy lamination, and the outer cylindrical surface of the stator iron core 21 is uniformly processed with a plurality of equi-spaced axial armature slots 212 towards the center axial line radially, the said stator assembly 20 further comprises winding assemblies 22 with the same number as the axial armature slots 212 of the said stator iron core 21, each winding assembly 22 comprises a winding wire frame 222 matched with the axial armature slots 212 of the said stator iron core 21, a stator winding 221 arranged in the slot 2221 of the winding wire frame 222 and a piece of magnetic conducting body 223 arranged in a through-hole 2222 of the winding wire frame 222; and each winding assembly 22 is respectively arranged in each axial armature slot 212 of the said stator iron core 21.

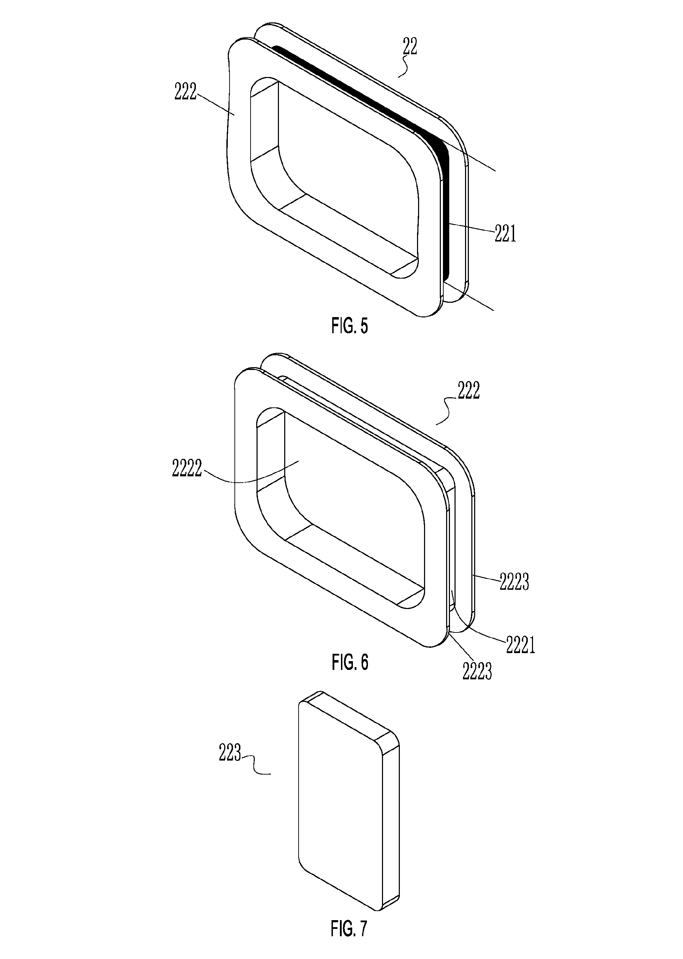

See Figure 5 and Figure 6, the said stator winding 221 is fixed in the slot 2221 of the said winding wire frame 222 with quick-drying adhesive.

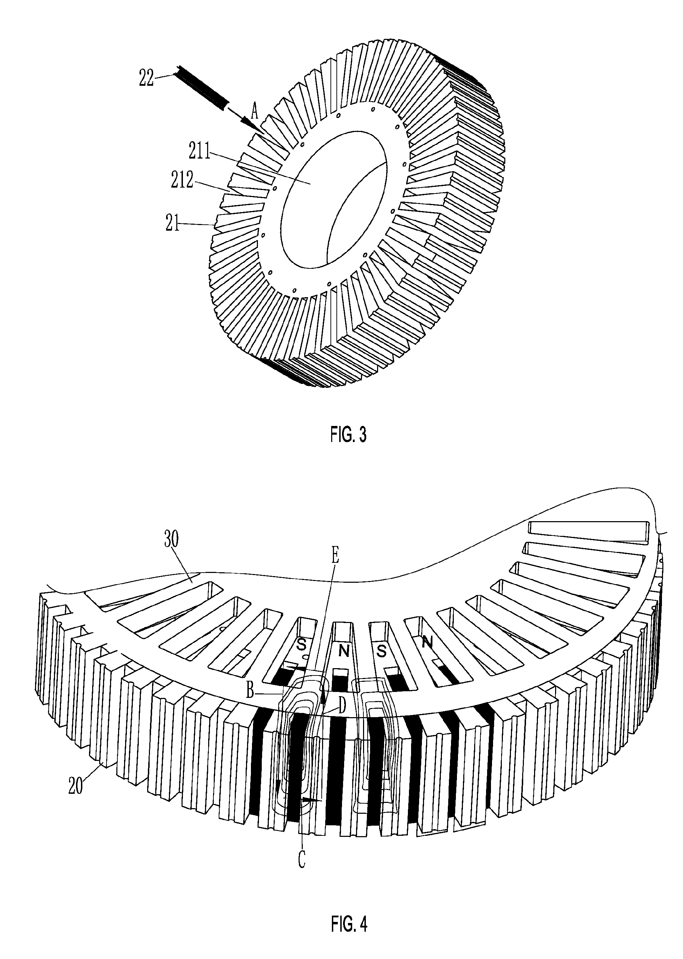

See Figure 3, Figure 8 and Figure 9, the said winding assembly 22 is fixed in the axial armature slot 212 of the said stator iron core 21 with adhesive.

See Figure 1, Figure 10 and Figure11, the said rotor assembly 30 comprises a disc-shaped rotor sheet 31 made from non-magnetic stainless steel, as well as permanent magnets 32 of even number; the said rotor sheet 31 is uniformly arranged with equi-spaced through-holes 315 with the same number as the said permanent magnets 32, the permanent magnet 32 are uniformly fixed respectively in a through-hole 315 of the said rotor sheet 31 in equal space, with N and S poles alternately arranged.

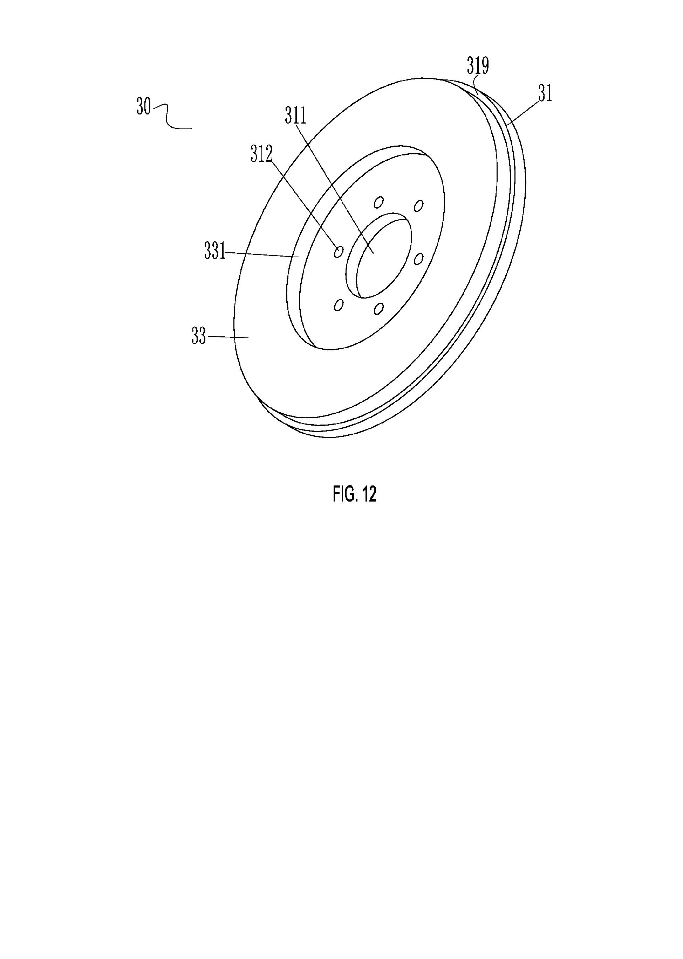

See Figure 1 and Figure 12, to avoid flux leakage and increase magnetic storage capacity, the said rotor assembly 30 further comprises a disc-shaped magnetism-tied plate 33 made from non-magnetic stainless steel, e.g. a Q235 brand of carbon structural steel, outer diameter of the magnetism-tied plate 33 is smaller than that of the said rotor sheet 31, and the said magnetism-tied plate 33 is arranged with a center through-hole 331, the said magnetism-tied plate 33 is fixed on the end face 319 of the said rotor sheet 31 deviated from the said stator assembly 20, and covers each permanent magnet 32 which are fixed respectively in each through-hole 315 of the said rotor sheet 31.

See Figure 2, Figure 10 and Figure 11, the said rotor sheet 31 is arranged with a center through-hole 311, around which there are several axial through-holes 312. the said electric machine shaft 50 is arranged with a pedestal seat 51 shaped like a flange, the pedestal seat 51 is arranged with several axial threaded holes 512. the said electric machine shaft 50 is inserted in the center through-hole 311 of the said rotor sheet 31, each screw respectively passes through each axial through-hole 312 on the said rotor sheet 31 and is screwed in each axial threaded hole 512 on the pedestal seat 51 of the said electric machine shaft 50, thus fixing the said rotor sheet 31 on the said electric machine shaft 50.

See Figure 1 to Figure 3, inner face of the said end cover 40 is arranged with an axial center boss 42 matched with the axial central through-hole 211 of the said stator iron core 21. the axial center boss 42 of the said end cover 40 is assembled in the axial central through-hole 211 of the said stator iron core 21, and stator iron core 21 of the said stator assembly 20 is fixed on the said end cover 40 with adhesive.

See Figure 1 and Figure 2, the said disc-type electric machine further comprises two bearings 60 installed separately in two axial central through-hole 41 of the said end cover 40, and by virtue of the two bearings 60, the said electric machine shaft 50 is rotatably supported on the said end cover 40.

According to stator and rotor quantity, disc-type electric machine of the invention can be a structure of single-stator single-rotor, double-stator double-rotor, single-stator double-rotor and multi-rotor multi-stator, which can be combined freely as required. What is drawn from Figure 1 to Figure 11 is single-stator single-rotor disc-type electric machine with 48 slots and 32 poles, namely, there is one stator assembly 20 and rotor assembly 30 of the disc-type electric machine, 48 axial armature slots 212 of the stator iron core 21 of the stator assembly 20, 48 winding assemblies 22 and 32 permanent magnets 32 of the rotor assembly 30.

See Figure 6, both end faces of the winding wire frame 222 are provided with collar flange 2223, slot 2221 holding the stator assembly is formed between the two collar flanges 2223, as to this kind of structure, stator winding is required to be directly wound on the winding wire fame 222. Or, design the winding wire frame 222 into two winding wire frames with only one end face arranged with collar flange 2223 respectively, first of all, use varnished wire on the winding former to wind stator winding, case inner cavity of the stator winding from the side of the first winding wire frame without flange, then embed the side of the second winding wire frame without flange in the inner cavity of the stator winding, so as to be butted and fixed to the first winding wire frame.

See Figure 7, the said permanent magnets 32 are neodymium-iron-boron alloy of high density of magnetic energy or the strontium or barium ferrite.

The said "fix" includes: bond and fix with adhesive, the adhesive for bonding and fixing can be any adhesive with operating ,its resistance to heat are no lower than the heat resisting level of the insulation class of the said electric machine.

See Figure 1 to Figure 11, accordingly, the invention further presents manufacturing method of a disc-type electric machine with amorphous iron alloy axial magnetic circuit, comprising the following steps:
a. Preparation: select and use commercially available amorphous iron alloy lamination with satisfactory sizes, which is processed to be a cylinder to served as blank of the stator iron core 21 of the stator assembly 20.
b. As to the fabrication of the stator iron core 21, execute one of the following steps selectively:
   b₁. If the blank of the said stator iron core 21 is a cylindrical section, axial central through-hole 211 is required to be processed on the blank of the said stator iron core 21, and the outer cylindrical surface of the stator iron core 21 is required to be uniformly processed with a plurality of equi-spaced axial armature slots 212 towards the center axial line radially.
   b₂. If the blank of the said stator iron core 21 is a cylindrical section with axial central through-hole 211, it is only required to process the outer cylindrical surface of the blank of the stator iron core 21 uniformly with a plurality of equi-spaced axial armature slots 212 towards the center axial line radially.
c. Fixation between the stator iron core 21 and the end cover 40: coat adhesive on one axial end face of the said stator iron core 21 and inner cylindrical surface of its axial central through-hole 211, and slip the axial central through-hole 211 of the said stator iron core 21 onto the axial center boss 42 of the said end cover 40, enable the axial end face of the said stator iron core 21 coated with adhesive to cling to the inner face of the said end cover 40, then roast and finalize under 125±5°C for 3~4hours, completing the fixation between the said stator iron core 21 and the said end cover 40; ensure that each parameter during roast and finalization is consistently set, it is roasted and finalized by the applicant under 130°C for 3.5h.
d. Fabrication of the winding assemblies 22 of the stator assembly 20:
   d₁. Wind enamel-insulated wire in the slots 2221 of the winding wire frame 222 to form stator winding 221.
   d₃. Embed magnetic conducting body 223 in the through-hole 2222 of the said winding wire frame 222.
e. Assemble the winding assemblies 22 and the stator iron core 21 to be stator assembly 20:
   e₁. load each winding assembly 22 respectively in each axial armature slot 212 of the stator iron core 21 which has been fixed to the said end cover 40, note that each winding assembly 22 shall not be higher than the axial end face of the said stator iron core 21.
   e₂. Winding assemblies 22 in each axial armature slot 212 of the said stator iron core 21 shall be entirely poured with adhesive, then roasted and finalized under 66±5°C for 1.5∼2.5hours, enabling each winding assembly 22 to be firmly adhered to the stator iron core 21 as a whole; it is roasted and finalized by the applicant under 66°C for 2hours.
f. According to normal operation, fix the rotor assembly 30 onto the electric machine shaft 50, the rotor assembly 30 comprises a rotor sheet 31 and permanent magnets 32 of even number which are fixed on the rotor sheet 31.
g. Complete machine assembly: according to normal operation, make the said electric machine shaft 50 supported rotatably on the position determined by the said end cover 40 and/ or shell 10, and fix the said end cover 40 to the said shell 10 to complete the whole assembly of the said electric machine.

See Figure 5 and Figure 6, after the step d₁ and before the step d₃ of d, there is also step d₂, namely bond and fix the said stator winding 221 in the slots 2221 of the winding wire frame 222 with adhesive.

See Figure 1, Figure 10 and Figure 11, rotor sheet 31 of the said rotor assembly 30 is a disc made of non-magnetic stainless steel, and the rotor sheet 31 is uniformly arranged with equi-spaced through-holes 315 with the same number as the said permanent magnets 32; after each permanent magnet 32 of the said rotor assembly 30 is cleaned up by cleaning agent, coat adhesive on one surface of it, bond and fix it respectively in a through-hole 315 of the said rotor sheet 31, with N and S poles alternately arranged, then roast and finalize under 125±5°C for 3~4hours, so as to complete the fabrication of the said rotor assembly 30. The temperature must be well controlled during roast and finalization, in case of excess temperature, permanent magnets 32 are easy to be demagnetized, while in case of too low temperature, the adhesive fails to be dried, for example, in the invention, it is roasted and finalized by the applicant under 130_{°}cfor 3.5h.

See Figure 1 and Figure 12, to avoid flux leakage and increase magnetic storage capacity, the said rotor assembly 30 further comprises a disc-type magnetism-tied plate 33 made from non-magnetic stainless steel, e.g. a Q235 brand of carbon structural steel, outer diameter of the magnetism-tied plate 33 is smaller than that of the said rotor sheet 31, and the said magnetism-tied plate 33 is arranged with a center through-hole 331; after the said magnetism-tied plate 33 is cleaned up by cleaning agent , coat adhesive on one end face of it, and bond and fix it on the end face 319 of the said rotor sheet 31, deviated from the said stator assembly 20, and covers all the permanent magnet 32 fixed in each through-hole 315 of the said rotor sheet 31, then conduct roast and finalization under 125±5°C for 3~4hours.

Special instructions: each permanent magnet 32 and beam magnetic plate 33 can be bonded and fixed on the said rotor sheet 31, roasted and finalized under 125±5°C for 3~4hours. During roast and finalization, the temperature must be well controlled, in case of excess temperature, permanent magnets 32 are easy to be demagnetized, while in case of too low temperature, adhesive fails to be dried; for example, in the invention, it is roasted and finalized by the applicant under 130°C for 3.5hours.

See Figure 6 and Figure 7, magnetic conducting body 223 embedded into the through-hole 2222 of the said winding wire frame 222 is made from a Q235 brand of carbon structural steel.

In various embodiments of the present invention, the amorphous ferroalloy material used by the said stator iron core 21 adopts section bar or section bar blank, which is manufactured by winding the nanosized iron-based amorphous ferroalloy strip produced by Advanced Technology & Materials Co., Ltd., People's Republic of China.

See Figure 1 and Figure 2, in various embodiments of the invention, as to adhesive for bonding and fixing each component in the said stator assembly 20, between the stator iron core 21 and the end cover 40, and among each component in the said rotor assembly 20, its resistance to heat shall not be lower than heat resisting level of the insulation class of the said electric machine. In various embodiments of the invention, the ESP110 resin produced by Henkel Corporation (U.S.A.) and two-component 3034A & 3034B epoxy resin of high-strength, resistance to high-temperature 200°C, manufactured by Langbowan Company are adopted, and the adhesion operations are executed as per requirements by the prior art related to adhesive.

The above-mentioned embodiments are specifically described in detail by means of only expressing the preferable executive methods of the present invention, which shall not thereby be understood as limitations to the scope of the said invention patent; it shall be noted by ordinary technicians in the art that several variations and improvements can be made without departing from the conception of the present invention, which are included within the protection scope therein; therefore, any and all equivalent alterations and modifications made within the scope of claims of the present invention are covered by the claims of the present invention.

## Claims

1. A disc-type electric machine with amorphous iron alloy axial magnetic circuit, comprising a shell (10), an end cover (40), a stator assembly (20), a rotor assembly (30) and an electric machine shaft (50) matched with said stator assembly (20); wherein one end face of said stator assembly (20) is fixed on the inner face of said end cover (40) axially; wherein said rotor assembly (30) is fixed on said electric machine shaft (50) and close to the other end face of said stator assembly (20) in parallel, thus to form an axial air gap (90) between them; wherein said electric machine shaft (50) is rotatably supported on the position determined by said end cover (40) and/ or shell (10), said end cover (40) being fixed at the open end of the said shell (10); and wherein said stator assembly (20) comprises a stator iron core (21); **characterized in that**:
said stator iron core (21) is processed into a cylinder with an axial central through-hole (211) from the amorphous iron alloy lamination, and the outer cylindrical surface of the stator iron core (21) is uniformly processed with a plurality of equi-spaced axial armature slots (212) towards the center axial line radially; wherein said stator assembly (20) further comprises winding assemblies (22) with the same number as the axial armature slots (212) of said stator iron core (21), each winding assembly (22) comprising a winding wire frame (222) matched with the axial armature slots (212) of the said stator iron core (21), a stator winding (221) arranged in the slot (2221) of the winding wire frame (222) and a piece of magnetic conducting body (223) arranged in a through-hole (2222) of the winding wire frame (222); and wherein each winding assembly (22) is respectively arranged in each axial armature slot (212) of said stator iron core (21).

2. The disc-type electric machine of claim 1, **characterized in that**:
said stator winding (221) is fixed in the slot (2221) of said winding wire frame (222) with quick-drying adhesive.

3. The disc-type electric machine of claim 1, **characterized in that**:
said winding assemblies (22) are fixed in the axial armature slots (212) of the said stator iron core (21) with adhesive.

4. The disc-type electric machine of claim 1, **characterized in that**:
said rotor assembly (30) comprises a disc-shaped rotor sheet (31) made from non-magnetic stainless steel, as well as permanent magnets (32) of even number; said rotor sheet (31) is uniformly arranged with equi-spaced through-holes (315) with the same number as said permanent magnets (32); and the permanent magnets (32) are uniformly fixed respectively in a through-hole (315) of said rotor sheet (31) in equal space, with N and S poles alternately arranged.

5. The disc-type electric machine of claim 4, **characterized in that**:
said rotor assembly (30) further comprises a disc-shaped magnetism-tied plate (33) made from non-magnetic stainless steel, outer diameter of the magnetism-tied plate (33) being smaller than that of said rotor sheet (31), and said magnetism-tied plate (33) being arranged with a center through-hole (331); wherein said magnetism-tied plate (33) is fixed on the end face (319) of said rotor sheet (31) deviated from said stator assembly (20), and covers each permanent magnet (32) which is fixed respectively in each through-hole (315) of said rotor sheet (31).

6. The disc-type electric machine of claim 4, **characterized in that**:
said rotor sheet (31) is arranged with a center through-hole (311), around which there are several axial through-holes (312); wherein said electric machine shaft (50) is arranged with a pedestal seat (51) shaped like a flange, the pedestal seat (51) being arranged with several axial threaded holes (512); wherein said electric machine shaft (50) is inserted in the center through-hole (311) of the said rotor sheet (31), each screw respectively passing through each axial through-hole (312) on said rotor sheet (31) and screwed in each axial threaded hole (512) on the pedestal seat (51) of said electric machine shaft (50), thus fixing said rotor sheet (31) on said electric machine shaft (50).

7. The disc-type electric machine of any one of claims 1 to 6, **characterized in that**:
an inner face of said end cover (40) is arranged with an axial center boss (42) matched with the axial central through-hole (211) of said stator iron core (21); the axial center boss (42) of said end cover (40) is assembled in the axial central through-hole (211) of said stator iron core (21), and stator iron core (21) of said stator assembly (20) is fixed on said end cover (40) with adhesive.

8. The disc-type electric machine of claim 7, **characterized in that**:
the disc-type electric machine further comprises two bearings (60) installed separately in two axial central through-holes (41) of said end cover (40), and by means of the two bearings (60), said electric machine shaft (50) is rotatably supported on said end cover (40).

9. A stator assembly (20) applied to a disc-type electric machine, comprising a stator iron core (21); **characterized in that**:
said stator iron core (21) is processed into a cylinder with an axial central through-hole (211) from the amorphous iron alloy lamination, and the outer cylindrical surface of the stator iron core (21) is uniformly processed with a plurality of equi-spaced axial armature slots (212) towards the center axial line radially; said stator assembly (20) further comprises winding assemblies (22) with the same number as the axial armature slots (212) of said stator iron core (21), each winding assembly (22) comprising a winding wire frame (222) matched with the axial armature slots (212) of said stator iron core (21), a stator winding (221) arranged in the slot (2221) of the winding wire frame (222) and a piece of magnetic conducting body (223) arranged in a through-hole (2222) of the winding wire frame (222); and each winding assembly (22) is respectively arranged in each axial armature slot (212) of the said stator iron core (21).

10. The stator assembly (20) of claim 9, **characterized in that**:
said stator winding (221) is fixed in the slot (2221) of said winding wire frame (222) with quick-drying adhesive.

11. The stator assembly (20) of claim 9 or 10, **characterized in that**:
said winding assemblies (22) are fixed in the axial armature slots (212) of said stator iron core (21) with adhesive.

12. Manufacturing method of a disc-type electric machine with amorphous iron alloy axial magnetic circuit, comprising the following steps:
a. Preparation: select and use amorphous iron alloy lamination, which is processed to be a cylinder to serve as blank of the stator iron core (21) of the stator assembly (20);
b. As to the fabrication of the stator iron core (21), execute one of the following steps selectively:
b₁. If the blank of said stator iron core (21) is a cylindrical section, axial central through-hole (211) is required to be processed on the blank of the said stator iron core (21), and the outer cylindrical surface of the stator iron core (21) is required to be uniformly processed with a plurality of equi-spaced axial armature slots (212) towards the center axial line radially;
b₂. If the blank of the said stator iron core (21) is a cylindrical section with axial central through-hole (211), it is only required to process the outer cylindrical surface of the blank of the stator iron core (21) uniformly with a plurality of equi-spaced axial armature slots (212) towards the center axial line radially;
c. Fixation between the stator iron core (21) and the end cover (40): coat adhesive on one axial end face of said stator iron core (21) and inner cylindrical surface of its axial central through-hole (211), and slip the axial central through-hole (211) of said stator iron core (21) onto the axial center boss (42) of said end cover (40), enable the axial end face of said stator iron core (21) coated with adhesive to cling to the inner face of said end cover (40), then roast and finalize, completing the fixation between said stator iron core (21) and said end cover (40);
d. Fabrication of the winding assemblies (22) of the stator assembly (20):
d₁. Wind enamel-insulated wire in the slots (2221) of the winding wire frame (222) to form stator winding (221);
d₃. Embed magnetic conducting body (223) in the through-hole (2222) of the said winding wire frame (222);
e. Assemble the winding assemblies (22) and the stator iron core (21) to be stator assembly (20):
e₁. Load each winding assembly (22) respectively in each axial armature slot (212) of the stator iron core (21) which has been fixed with said end cover (40), note that each winding assembly (22) shall not be higher than the axial end face of said stator iron core (21);
e₂. Winding assemblies (22) in each axial armature slot (212) of said stator iron core (21) shall be entirely poured with adhesive, then roasted and finalized, enabling each winding assembly (22) to be firmly adhered to the stator iron core (21) as a whole;
f. According to normal operation, fix the rotor assembly (30) onto the electric machine shaft (50), wherein the rotor assembly (30) comprises a rotor sheet (31) and permanent magnets (32) of even number which are fixed on the rotor sheet (31);
g. Complete machine assembly: according to normal operation, make said electric machine shaft (50) supported rotatably on the position determined by said end cover (40) and/or shell (10), and fix said end cover (40) with said shell (10) to complete the whole assembly of said electric machine.

13. The manufacturing method of claim 12, **characterized in that**:
in Step c, the temperature during roast and finalization is 125±5°C, with a duration of 3~4hours.

14. The manufacturing method of claim 12, **characterized in that**:
after the step d₁ and before the step d₃ of d, there is also step d₂, namely bond and fix said stator winding (221) in the slots (2221) of the winding wire frame (222) with adhesive.

15. The manufacturing method of claim 12, **characterized in that**:
in Step e₂, the temperature during roast and finalization is 66±5°C with a duration of 1.5∼2.5hours.

16. The manufacturing method of claim 12, **characterized in that**:
rotor sheet (31) of said rotor assembly (30) is a disc made of non-magnetic stainless steel, and the rotor sheet (31) is uniformly arranged with equi-spaced through-holes (315) with the same number as said permanent magnets (32); after each permanent magnet (32) of said rotor assembly (30) is cleaned up by cleaning agent, coat adhesive on one surface of it, bond and fix it respectively in a through-hole (315) of said rotor sheet (31), with N and S poles alternately arranged, then roast and finalize to complete the fabrication of said rotor assembly (30).

17. The manufacturing method of claim 16, **characterized in that**:
the temperature during said roast and finalization is 125±5°C, and with a duration of 3∼4hours.

18. The manufacturing method of claim 16, **characterized in that**:
said rotor assembly (30) further comprises a disc-type magnetism-tied plate (33) made from non-magnetic conducting stainless steel, outer diameter of the magnetism-tied plate (33) is smaller than that of the said rotor sheet (31), and the said magnetism-tied plate (33) is arranged with a center through-hole (331); after said magnetism-tied plate (33) is cleaned up by cleaning agent, coat adhesive on one end face of it, and bond and fix it on the end face(319) of said rotor sheet (31) deviated from said stator assembly (20), and cover all the permanent magnets (32) fixed in each through-hole (315) of said rotor sheet (31), then roast and finalize.

19. The manufacturing method of claim 18, **characterized in that**:
the temperature during said roast and finalization is 125±5°C, with a duration of 3~4hours.

20. The manufacturing method of claim 12, **characterized in that**:
magnetic conducting body (223) embedded into the through-hole (2222) of said winding wire frame (222) is made from a Q235 brand of carbon structural steel.

21. The manufacturing method of any one of claims 12 to 20, **characterized in that**:
as to adhesive for bonding and fixing among each component in said stator assembly (20), between the stator iron core (21) and the end cover (40), and among each component in said rotor assembly (20), its resistance to heat shall not be lower than heat resisting level of the insulation class of said electric machine.
